# EUROPÄISCHE PATENTSCHRIFT

(11) **EP 1 570 144 B1**
(45) Veröffentlichungstag und Bekanntmachung des Hinweises auf die Patenterteilung: **01.06.2011**
(21) Anmeldenummer: 03811710.7
(22) Anmeldetag: 18.11.2003
(51) Int. Cl.: E04H 12/22, F16B 25/10

(54) **PFOSTENANKER**
ANCHOR BAR WITH A SUPPORT BLOCK
TIGE D'ANCRAGE A BLOC DE SUPPORT

(30) Priorität: 25.11.2002 CH 197802
(43) Veröffentlichungstag der Anmeldung: 07.09.2005
(73) Patentinhaber: Ed. Geistlich & Söhne AG, 8952 Schlieren (CH)
(72) Erfinder: FANKHAUSER, Urs, CH-9500 Wil (CH); BERTOLA, Bruno, CH-8004 Zürich (CH)
(74) Vertreter: Liebetanz, Michael
(86) Internationale Anmeldenummer: PCT/CH2003/000762
(87) Internationale Veröffentlichungsnummer: WO 2004/048718

(56) Entgegenhaltungen:
- WO-A-99/07956
- DE-A- 3 634 266
- US-A1- 2001 009 638

## Beschreibung

Die Erfindung betrifft einen Pfostenanker mit den Merkmalen des Oberbegriffs des Anspruchs 1.

Ein solcher Pfostenanker ist aus dem Stand der Technik, beispielsweise der DE 36 34 266 bekannt. Dort wird eine einschraubbare Gewindestange in einem entsprechenden Bohrloch eines Pfostens verklebt, wobei auf der Gewindestange eine Längsnut vorgesehen ist, um den Leim entsprechend in das Bohrloch zwischen Gewindestange und Bohrlochwand eintreten zu lassen.

Ein anderer Pfostenanker ist aus der DE 199 12 815 bekannt, bei dem an einer Platte, die gegen die Unterseite eines Pfostens legbar ist, ein Gewindedorn vorgesehen ist, der bei der Positionierung des Pfostenankers in den Pfosten eindringt. Auf der gegenüberliegenden Seite des Pfostenankers ist eine Muffe mit Innengewinde vorgesehen, so dass aussenseitig des Pfostens ein Ankerstab nachträglich eingeschraubt werden kann.

Bei allen Vorschlägen des Standes der Technik, auch bei eingeleimten Gewindestangen, besteht die Problematik der Parallelität von Pfostenanker und Pfosten. Dies bedeutet, dass der Pfostenanker mit seiner Mittelachse zumeist nicht genau parallel zur Längsachse des Pfostens liegt. Dies ist eine unerwünschte Eigenschaft eines solchen Systems und ein Nachteil beim Zusammenbau solcher Pfostenankersysteme auf Baustellen.

In der Praxis wird daher nicht wie bei der DE 199 12 815 die Einheit Gewindestange und Pfosten erst auf der Baustelle zusammengesetzt, sondern dies geschieht vorab, um die besagte Parallelität unter industriellen Fertigungsgegebenheiten möglichst gut erreichen zu können.

Ferner lässt beispielsweise bei der Verbindung von Metallankern in Holzpfosten die Auszugskraft der Anker meist zu wünschen übrig.

Ausgehend von diesem Stand der Technik liegt der Erfindung die Aufgabe zugrunde, einen Pfostenanker der eingangs genannten Art anzugeben, der eine bessere Parallelität aufweist und bei dem die Fixierung zu dem verdrehsicherer ist.

Diese Aufgabe wird erfindungsgemäss für einen Pfostenanker der eingangs genannten Art mit den Merkmalen des kennzeichnenden Teils des Merkmals des Anspruchs 1 gelöst.

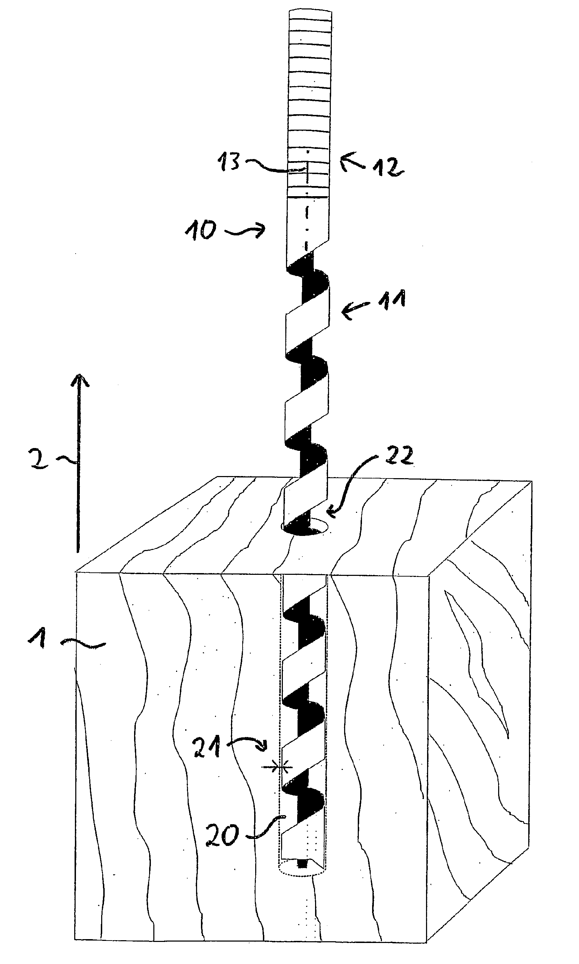

Die Erfindung wird nun mit Hilfe eines beispielhaften Ausführungsbeispiels anhand der Zeichnung näher beschrieben. Die einzige Zeichnung zeigt eine teilweise geschnittene perspektivische Ansicht eines Pfostens zusammen mit einem eingesetzten Pfosteneingang.

Mit dem Bezugszeichen 1 ist ein Pfosten bezeichnet. Der Pfosten 1 ist aus Holz und weist einen quadratischen Querschnitt auf. Natürlich kann der Querschnitt auch anders ausgestaltet sein, zum Beispiel rund oder elliptisch, rechteckig oder polygonal. Das Material des Pfostens 1 kann auch aus einem anderen Material gewählt sein, sofern diese nur im untenstehenden Sinn zu Holz gleichartig sind. Das betrifft insbesondere Kunststoffmaterialien.

Der besagte Pfosten 1 verfügt über eine Längsachse, deren Ausrichtung hier durch den parallel zu dieser verlaufenden Pfeil 2 angezeigt ist. Der Pfosten 1 ist mit Hilfe eines erfindungsgemässen Pfostenankers oder kurz Ankers 10 an einer in der Figur nicht dargestellten Wand- oder Bodenfläche befestigbar. Die Figur zeigt einen Moment aus der Herstellung der Verbindung von Anker 10 und Pfosten 1, wenn der Anker 10 noch nicht vollständig im Pfosten 1 versenkt ist.

Der Anker 10 ist vorzugsweise einstückig aufgebaut und besteht dabei aus mindestens zwei unterschiedlichen Bereichen 11 und 12. Bei dem ersten Bereich 11 handelt es sich um einen Schlangenbohrer, wobei dieser Bereich 11 dafür vorgesehen ist, in den Pfosten 1 eingelassen zu werden. Der zweite Bereich 12 kann je nach Anwendung des Pfostenankers ausgestaltet sein, insbesondere kann es sich dabei um einen Gewindestangenabschnitt handeln. Dieser Gewindestangenabschnitt 12 ist entweder selbst oder über einen weiteren in der Zeichnung nicht dargestellten Abschnitt mit einem Antrieb, beispielsweise einer Bohrmaschine, formschlüssig verbindbar, um den Schlangenbohrer 11 in den Pfosten 1 hineintreiben zu können.

Die Figur zeigt in punktierter Form die Umrisse einer Bohrloches 20, in dem der Schlangenbohrerabschnitt 11 bereits über die Hälfte vorgeschoben worden ist. Anstelle eines sogenannten Schlangenbohrers, mit dem aus dem Pfosten herausgeschnittene Späne herausgehoben werden können, ist auch jeder andere Bohrer einsetzbar, mit dem eine spannungsfreie Bohrung, insbesondere in Holz, erzeugbar ist, bei der kein radiales Spiel besteht. Unter radialem Spiel ist hier der Abstand 21 zwischen der Aussenseite des Bohrers 11 und der Innenwand der Bohrung 20 zu verstehen.

Der Schlangenbohrer 11 fördert Späne aus dem Bohrloch 20 heraus und schafft dabei in axialer Richtung, d.h. entlang der Längsachse 13 des Ankers 10 einen gewissen Freiraum, in den nach vollständigem Einführen des Bohrerabschnittes 11 durch die obere Öffnung 22 der Bohrung 20 ein Klebstoff einführbar ist. Insbesondere günstige Klebstoffe sind Klebstoffe auf Epoxyd-Harz-Basis beziehungsweise Polyurethane. Vor dem Einbringen des Klebstoffes kann der Anker 10 vorzugsweise eine achtel bis eine halbe Drehung zurückgedreht werden, um die Einführung des Klebstoffes zu vereinfachen. Er kann aber auch vollständig herausgezogen, der Klebstoff eingefüllt und der Bohrer wieder eingeführt werden.

Mit dem erfindungsgemässen Bohrer ist ein axial richtiger Einbau gewährleistet, der eine gute Zentrierung des Ankers 10 in dem Pfosten 1 gestattet. Der Stand der Technik nach der DE 199 12 815 mit dem Dorn führt zu einer Verdrängung des Materials des Pfostens 1 und damit zu Spannungen in diesem. Der Schlangenbohrer 10 erzeugt eine spannungsfreie Bohrung in Holz und anderen vergleichbaren Materialien.

Die Länge des Ankers 10 ist abhängig von seinem Einsatzgebiet. Bei einem Pfosten 1 mit 5 bis 10 Zentimeter Durchmesser oder Querschnittmassen können übliche Längen bei einem Durchmesser des Schlangenbohrers 11 zwischen 6 und 10 Millimeter eine Gesamtlänge des Ankers zwischen 10 und 70 Zentimeter aufweisen. Vorzugsweise ist diese Länge hälftig auf den Bohrerteil 11 und den Gewindestangenteil 12 aufgeteilt. Natürlich kann die Gewindestange 12 oder der Schlangenbohrer 11 auch gegenüber dem jeweils anderen Abschnitt kürzer oder länger sein. Es ist auch möglich, zwischen Schlangenbohrer 11 und Gewindestange 12 (oder einer flachen Stange ohne Gewinde) ein in der Zeichnung nicht dargestelltes Verbindungselement vorzusehen. Dies kann ein Aussensechskant sein oder eine radial zur Längsachse ausgerichtete Scheibe.

Mit dem Anker 10 gemäss dieser Erfindung ist eine einfache, sehr sichere, zentrierbare und axial richtig ausgerichtete Ankervorrichtung geschaffen, die vorab in einem Lager oder bei der Herstellung des Pfostens in diesen eingetrieben wird. Alternativ kann der Pfostenanker erst auf einer Baustelle in die dort vorgesehenen Pfosten eingelassen.

## Patentansprüche

1. Pfosten (1) mit einem mit diesem verbundenen Pfostenanker (10), der aus zwei endseitigen Abschnitten (11, 12) besteht, wobei der eine Abschnitt (11) in den Pfosten (1) ragt und der andere Abschnitt (12) zur Befestigung an oder in einem anderen Element vorgesehen ist, **dadurch gekennzeichnet, dass** der Pfosten über ein Bohrloch (20) verfügt, dass der eine Abschnitt (11) ein Bohrerabschnitt (11) ist, wobei das Bohrloch (20) mit dem besagten Bohrerabschnitt (11) im wesentlichen kein radiales Spiel aufweist, so dass der in den Pfosten (1) eingebrachte Abschnitt (11) im wesentlichen spannungsfrei in dem Bohrloch (20) in dem Pfosten (1) ist.

2. Pfosten (1) nach Anspruch 1, **dadurch gekennzeichnet, dass** mindestens teilweise in dem Freiraum zwischen Bohrerabschnitt (11) und Bohrloch (20) in radialer und/oder in axialer Richtung Klebstoff ist.

3. Pfosten (1) nach Anspruch 1 oder 2, **dadurch gekennzeichnet, dass** der Bohrerabschnitt ein Schlangenbohrer (11) ist.

4. Pfosten (1) nach einem der Ansprüche 1 bis 3, **dadurch gekennzeichnet, dass** der Pfostenanker (10) einen Durchmesser des Bohrerabschnittes (11) zwischen 5 und 18 Millimeter und eine Gesamtlänge des Pfostenankers (10) zwischen 10 und 100 Zentimeter aufweist, wobei die besagte Länge vorzugsweise hälftig auf den Bohrerabschnitt (11) und den anderen Abschnitt (12) verteilt ist.

5. Pfosten (1) nach einem der Ansprüche 1 bis 4, **dadurch gekennzeichnet, dass** der Pfostenanker (10) einstückig ausgestaltet ist und dass der andere Abschnitt (12) eine Gewindestange ist.

6. Pfosten (1) nach einem der Ansprüche 1 bis 5, **dadurch gekennzeichnet, dass** die beiden Abschnitte (11 und 12) aneinanderstossen.

7. Pfosten (1) nach einem der Ansprüche 1 bis 6, **dadurch gekennzeichnet**, **dadurch gekennzeichnet, dass** die Bohrung (20) im Pfosten (1) zentral ausgeführt ist.

8. Pfosten nach einem der Ansprüche 1 bis 7, **dadurch gekennzeichnet, dass** der Pfosten (1) aus Holz oder aus Kunststoffmaterialien ist und vorzugsweise einen quadratischen, elliptischen, rechteckigen oder polygonalen Querschnitt aufweist.

9. Verfahren zur Einbringung eines Pfostenankers (10) in einen Pfosten (1) nach einem der vorstehenden Ansprüche, **dadurch gekennzeichnet, dass** es die Schritte umfasst,
- Bohren eines Bohrloches (20) in dem Pfosten (1) mit dem Bohrerabschnitt (11) des Pfostenankers (10),
- Einbringen von Klebstoff in das Bohrloch (20) bei eingesetztem Bohrerabschnitt (11) zur Verfüllung eines verbleibenden radialen und des axialen Spiels des Bohrerabschnittes (11) im Bohrloch (20) oder alternativ Herausziehen des Bohrerabschnittes (11), Einbringen von Klebstoff in das Bohrloch (20) und erneutes Einführen des Bohrerabschnittes (11) in das mindestens teilweise klebstoffgefüllte Bohrloch (20).

10. Verfahren nach Anspruch 9, **dadurch gekennzeichnet, dass** vor dem Einbringen des Klebstoffes der Pfostenanker (10) eine achtel bis eine halbe Drehung zurückgedreht wird.

## Claims

1. Post (1) with a post anchor (1) being in connection with the post (1), said post anchor (1) comprising two end sections (11, 12), where one section (11) protrudes into the post (1) and the other section (12) is intended for fastening on or in another element, **characterized in that** the post (1) having a drill hole (20), that the section (11) protruding into the post is a drill bit section (11), wherein the drill hole (20) and said drill bit section have substantially no radial play such that the section (11) which protrudes into the post (1) is substantially stress-free in the post (1).

2. Post (1) according to claim 1, **characterized in that** at least partly in the free space between the drill bit section (11) and the drillhole (20) there is in radial and/or axial direction an adhesive.

3. Post (1) according to claim 1 or 2, **characterized in that** the drill bit section is an auger bit (11).

4. Post (1) according to one of the claims 1 to 3, **characterized in that** the diameter of the auger bit (11) of the anchor (10) is between 5 and 18 millimeters and the total length of the anchor (10) is between 10 and 100 centimeters, the said length preferably being divided in half between the drill bit section (11) and the other section (12).

5. Post (1) according to one of the claims 1 to 4, **characterized in that** post anchor is designed in one piece and **in that** the other section (12) is a threaded rod.

6. Post (1) according to one of the claims 1 to 5, **characterized in that** the two sections (11 and 12) abut.

7. Post (1) according to one of the claims 1 to 6, **characterized in that** the drillhole (20) is provided centrally in the post.

8. Post (1) according to one of the claims 1 to 7, **characterized in that** the post (1) is made of wood or of plastic materials and preferably has a square, elliptical, rectangular or polygonal cross section.

9. Method of introducing a post anchor (1) as claimed in one of the preceding claims into a post (10), **characterized in that** it comprises the following steps:
- drilling a drillhole (20) in the post (10) with the drill bit section (11),
- introducing adhesive into the drillhole (20) with the drill bit section (11) inserted so as to take up, by filling, any remaining radial play and the axial play of the drill bit section (11) in the drillhole (20), or, alternatively, withdrawing the drill bit section (11), introducing adhesive into the drillhole (20) and reinserting the drill bit section (11) into the at least partially adhesive-filled drillhole (20).

10. The method as claimed in claim 9, **characterized in that**, prior to introducing the adhesive, the post anchor (10) is rotated back by an eighth to a half of a rotation.

## Revendications

1. Bloc support (1) comprenant un tirant d'ancrage (10) connecté à celui-ci, qui se compose de deux portions d'extrémité (11, 12), l'une des portions (11) pénétrant dans le bloc support (1) et l'autre portion (12) étant prévue pour être fixée sur ou dans un autre élément, **caractérisé en ce que** le bloc support dispose d'un trou de forage (20), **en ce qu'**une portion (11) est une portion de foret (11), le trou de forage (20) ne présentant avec ladite portion de foret (11) sensiblement aucun jeu radial, de sorte que la portion (11) introduite dans le bloc support (1) est sensiblement sans tension dans le trou de forage (20) dans le bloc support (1).

2. Bloc support (1) selon la revendication 1, **caractérisé en ce que** de l'adhésif est introduit au moins en partie dans l'espace libre entre la portion de foret (11) et le trou de forage (20) dans la direction radiale et/ou axiale.

3. Bloc support (1) selon la revendication 1 ou 2, **caractérisé en ce que** la portion de foret est une mèche hélicoïdale (11).

4. Bloc support (1) selon l'une quelconque des revendications 1 à 3, **caractérisé en ce que** le tirant d'ancrage (10) présente un diamètre de la portion de foret (11) compris entre 5 et 18 mm, et une longueur totale du tirant d'ancrage (10) entre 10 et 100 cm, ladite longueur étant de préférence partagée en deux moitiés entre la portion de foret (11) et l'autre portion (12).

5. Bloc support (1) selon l'une quelconque des revendications 1 à 4, **caractérisé en ce que** le tirant d'ancrage (10) est configuré d'une seule pièce et **en ce que** l'autre portion (12) est une tige filetée.

6. Bloc support (1) selon l'une quelconque des revendications 1 à 5, **caractérisé en ce que** les deux portions (11 et 12) sont en butée l'une contre l'autre.

7. Bloc support (1) selon l'une quelconque des revendications 1 à 6, **caractérisé en ce que** l'alésage (20) est réalisé centralement dans le bloc support (1).

8. Bloc support selon l'une quelconque des revendications 1 à 7, **caractérisé en ce que** le bloc support (1) est en bois ou en matière plastique et présente de préférence une section transversale carrée, elliptique, rectangulaire ou polygonale.

9. Procédé pour l'insertion d'un tirant d'ancrage (10) dans un bloc support (1) selon l'une quelconque des revendications précédentes, **caractérisé en ce qu'**il comprend les étapes suivantes :
- forage d'un trou de forage (20) dans le bloc support (1) avec la portion de foret (11) du tirant d'ancrage (10),
- introduction d'adhésif dans le trou de forage (20) lorsque la portion de foret (11) est insérée pour remplir un jeu radial et axial subsistant de la portion de foret (11) dans le trou de forage (20), ou, en variante, retrait de la portion de foret (11), introduction d'adhésif dans le trou de forage (20) et réinsertion de la portion de foret (11) dans le trou de forage (20) au moins en partie rempli d'adhésif.

10. Procédé selon la revendication 9, **caractérisé en ce qu'**avant l'introduction de l'adhésif, on fait tourner en arrière le tirant d'ancrage (10) d'un huitième de tour à un demi-tour.
